# EUROPEAN PATENT APPLICATION

(11) **EP 3 099 063 A1**
(43) Date of publication of application: **30.11.2016**
(21) Application number: 16171371.4
(22) Date of filing: 25.05.2016
(51) Int. Cl.: H04N 7/14

(54) **VIDEO COMMUNICATION METHOD AND APPARATUS**

(30) Priority: 29.05.2015 CN 201510290039
(71) Applicant: Xiaomi Inc., Beijing 100085 (CN)
(72) Inventor: YANG, Wankun, 100085 BEIJING (CN); NIU, Kun, 100085 BEIJING (CN); ZHU, Yifan, 100085 BEIJING (CN)
(74) Representative: Fontenelle, Sandrine

(57) **Abstract**

The present invention relates to a video communication method and apparatus for improving flexibility of presenting different video sources. The method includes: when performing a video communication with a communication opposite end of the terminal device, determining (S101) whether a video image needs to be switched; when determining that the video image needs to be switched, switching (S102) a first video image collected by the terminal device to a second video image collected by a designated smart device, the designated smart device being communicatively connected to the terminal device; and sending (S103) the second video image to the communication opposite end.

## Description

### TECHNICAL FIELD

The present invention generally relates to technical field of Internet, and more particularly, to a video communication method and apparatus.

### BACKGROUND

With a rapid development of communication technology, since the video-based communication manner needs no text input, and achieves a face to face communication via voice, more and more users utilize the video communication. In the related art, when a user A logs in a chat software (or an application) at a mobile phone terminal and performs a video communication with a user B, if the user A needs to log in the same chat account at a computer at the same time, the video source of the mobile phone terminal is switched to thecomputer terminal, in this case, the user B can only watch the video source of the computer terminal. Thereby, the display manner of the video source is simple, and the user B is unable to flexibly view different video sources at the side of the user A.

### SUMMARY

In order to solve the problems existing in the related art, the present invention provides a video communication method and apparatus for improving flexibility of presenting different video sources.

According to a first aspect of embodiments of the present invention, there is provided a video communication method, applied in (by) a terminal device, including:
when performing a video communication with a communication opposite end of the terminal device, determining whether a video image needs to be switched;
when determining that the video image needs to be switched, switching a first video image collected by the terminal device to a second video image collected by a designated smart device, the designated smart device being communicatively connected to the terminal device; and
sending the second video image to the communication opposite end.

In an embodiment, determining whether the video image needs to be switched may include:
detecting whether a first instruction message from the communication opposite end is received; and
when the first instruction message is received, determining whether the video image needs to be switched according to the first instruction message.

In an embodiment, determining whether the video image needs to be switched according to the first instruction message may include:
detecting whether a first operation triggered for the first instruction message is received; and
when the first operation triggered for the first instruction message is detected, determining that the video image needs to be switched.

In an embodiment, determining whether the video image needs to be switched may include:
detecting whether a second instruction message from the terminal device is received; and
when the second instruction message is received, determining whether the video image needs to be switched according to the second instruction message.

In an embodiment, switching the first video image collected by the terminal device to the second video image collected by the designated smart device may include:
determining an identity of the designated smart device;
determining that the designated smart device is communicatively connected to the terminal device via a local area network according to the identity; and
switching the first video image collected by the terminal device to the second video image collected by the designated smart device according to the identity.

In an embodiment, sending the second video image to the communication opposite end may include:
detecting a network type with the communication opposite end;
when detecting that the communication with the communication opposite end is via a communication network, sending the second video image to the communication opposite end via the communication network; and
when detecting that the communication with the communication opposite end is via an Internet, sending the second video image to the communication opposite end via the Internet.

According to a second aspect of embodiments of the present invention, there is provided a video communication apparatus, applied in (e.g. embedded in) a terminal device, including:
a determination module configured to, when performing a video communication with a communication opposite end of the terminal device, determine whether a video image needs to be switched;
a switching module configured to, when the determination module determines that the video image needs to be switched, switch a first video image collected by the terminal device to a second video image collected by a designated smart device, the designated smart device being communicatively connected to the terminal device; and
a sending module configured to send the second video image switched by the switching module to the communication opposite end.

In an embodiment, the determining module may include:
a first detection submodule configured to detect whether a first instruction message from the communication opposite end is received; and
a first determining submodule configured to, when the first detection submodule receives the first instruction message, determine whether the video image needs to be switched according to the first instruction message.

In an embodiment, the first determining submodule may include:
an operation detection submodule configured to detect whether a first operation triggered for the first instruction message is received; and
an operation determination submodule configured to, when the operation detection submodule detects the first operation triggered for the first instruction message, determine that the video image needs to be switched.

In an embodiment, the determination module further includes:
a second detection submodule configured to detect whether a second instruction message from the terminal device is received; and
a second determination submodule configured to, when the second detection submodule detects that the second instruction message is received, determine whether the video image needs to be switched according to the second instruction message.

In an embodiment, the switching module may include:
a third determination submodule configured to determine an identity of the designated smart device;
a communication establishing submodule configured to determine that the designated smart device is communicatively connected to the terminal device via a local area network according to the identity determined by the third determination submodule; and
a switching submodule configured to switch the first video image collected by the terminal device to the second video image collected by the designated smart device via the communication connection established by the communication establishing submodule according to the identity.

In an embodiment, the sending module may include:
a third detection submodule configured to detect a network type with the communication opposite end;
a first sending submodule configured to, when the third detection submodule detects that the communication with the communication opposite end is via a communication network, send the second video image to the communication opposite end via the communication network; and
when the third detection submodule detects that the communication with the communication opposite end is via an Internet, send the second video image to the communication opposite end via the Internet.

According to a third aspect of embodiments of the present invention, there is provided a video communication apparatus, including:
a processor; and
a memory for storing instructions executable by the processor;
wherein the processor is configured to:
   when performing a video communication with a communication opposite end of the terminal device, determine whether a video image needs to be switched;
   when determining that the video image needs to be switched, switch a first video image collected by the terminal device to a second video image collected by a designated smart device, the designated smart device being communicatively connected to the terminal device; and
   send the second video image to the communication opposite end.

The present invention also provides a computer program, which when executing on a processor of a terminal device, performs the above method.

The technical solutions provided by embodiments of the present invention may have the following beneficial effects: when determining a video image needs to be switched, a first video image collected by the terminal device is switched to a second video image collected by a designated smart device. In this way, the video image collected by the designated smart device may be flexibly switched at the terminal device side, and the video images of the terminal device side displayed at the communication opposite end may provide diversity, which facilitates the user of the communication opposite end to look the video images collected by different smart devices at the terminal device side, and improves the flexibility of presenting different video sources.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flow chart of a video communication method, according to an exemplary embodiment.
Fig. 1B is a scene view of a video communication method, according to an exemplary embodiment.
Fig. 2 is a flow chart of a video communication method, according to an exemplary first embodiment.
Fig. 3 is a flow chart of a video communication method, according to an exemplary second embodiment.
Fig. 4 is a block diagram of a video communication device, according to an exemplary embodiment.
Fig. 5 is a block diagram of another video communication device, according to an exemplary embodiment.
Fig. 6 is a block diagram applicable for a video communication device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

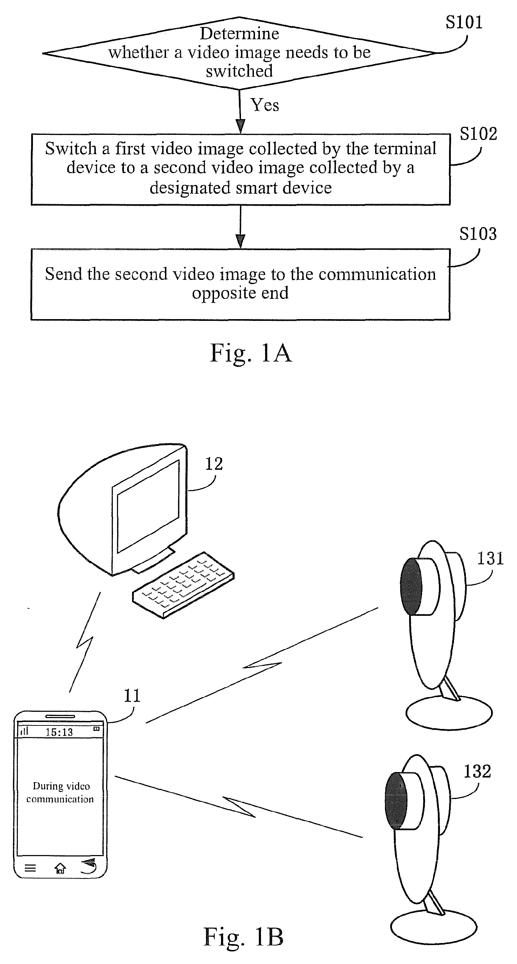

Fig. 1A is a flow chart of a video communication method, according to an exemplary embodiment. Fig. 1B is a scene view of a video communication method, according to an exemplary embodiment. The video communication method may be applied in a terminal device (such as a smart phone, a tablet computer, and a desktop computer). As shown in Fig. 1A, the video communication method includes the following steps S101-S103.

In step S101, when performing a video communication with a communication opposite end of the terminal device, it is determined whether a video image needs to be switched.

In an embodiment, the terminal device may perform a video communication with the communication opposite end via Internet, or may perform a video communication with the communication opposite end via a communication network such as 3G or 4G. In an embodiment, the video image may be switched by a first instruction message from the communication opposite end, wherein the first instruction message may be determined by a user of the communication opposite end according to his/her requirement. In another embodiment, the video image may be switched by a second instruction message at the terminal device, wherein the second instruction message may be generated by operating the terminal device by a user of the terminal device according to an instruction of the user of the communication opposite end.

In step S102, when determining that the video image needs to be switched, a first video image collected by the terminal device is switched to a second video image collected by a designated smart device, the designated smart device being communicatively connected to the terminal device.

In an embodiment, the designated smart device may be designated by the communication opposite end, or may be designated by the terminal device, particularly, may be determined by the user of the terminal device and the user of the communication opposite end according to specific requirements. In an embodiment, the smart device communicatively connected with the terminal device via local area network may be one, or may be more than one. In an embodiment, different smart devices may be provided at different locations, thereby video images in different orientations or spaces may be collected, and the terminal device may record identities of the smart devices and their locational positions in a list.

In step S103, the second video image is sent to the communication opposite end.

In an embodiment, the network used for sending the second video image to the communication opposite end can be determined according to a type of network between the terminal device and the communication opposite end. For example, when the video communication can be performed between the terminal device and the communication opposite end only via 3G or 4G, in order to ensure normal communication therebetween, the second video image may be sent to the communication opposite end via 3G or 4G communication network; and when the video communication may be performed between the terminal device and the communication opposite end via Internet, the second video image may be sent to the communication opposite end via Internet, in this way, the network cost of the terminal device is saved.

Hereinafter, illustration to the present invention is given by using Fig. 1B. As shown in Fig. 1B, in the case that it is detected that a smart phone 11 has accessed Internet, and a video communication is performed between a user using the smart phone 11 and a user using a desktop computer 12, the smart phone 11 may first detect a type of the communication connection with a smart camera 131 and a smart camera 132. If the smart phone 11 detects that the smart phone 11 has connected with the smart camera 131 and the smart camera 132 via local area network, when the smart phone 11 needs to switch a current first video image to a second video image collected by any smart device (such as the smart camera 131) of the smart camera 131 and the smart camera 132, the smart phone 11 acquires the second video image from the smart camera 131, and sends the second video image to the desktop computer 12 via Internet or 3G, 4G communication network. In this case, the smart camera 131 and the smart camera 132 do not need to access Internet or 3G, 4G communication network, and video images collected by different smart devices may be flexibly switched at the side of the smart phone 11.

In another embodiment, if the smart phone 11 detects that the smart mobile phone 11 is not connected with the smart camera 131 via local area network, the smart phone 11 may determine a type of a communication connection which may be established with the smart camera 131. For example, if the smart phone 11 detects that a communication connection with the smart camera 131 may be established via 4G, the smart phone 11 may receive the video image from the smart camera 131 via 4G communication network, thereby ensuring the user of the communication opposite end to be able to view the video image collected by the smart camera 131. Similarly, if the smart phone 11 detects that a communication connection with the smart camera 131 may be established via Internet, the smart phone 11 may receive the video image from the smart camera 131 via Internet, thereby ensuring the user of the communication opposite end to be able to view the video image collected by the smart camera 131. Still similarly, if the smart phone 11 detects that a communication connection with the smart camera 131 may be established via 3G, the smart phone 11 may receive the video image from the smart camera 131 via 3G, thereby ensuring the user of the communication opposite end to be able to view the video image collected by the smart camera 131.

In the present embodiment, when determining that the video image needs to be switched, the first video image collected by the terminal device is switched to the second video image collected by the designated smart device, in this way, the video image collected by the designated smart device may be flexibly switched at the terminal device side, and the video images of the terminal device side displayed at the communication opposite end may provide diversity, which facilitates the user of the communication opposite end to view the video images collected by different smart devices at the terminal device side, and improves the flexibility of presenting different video sources.

In an embodiment, determining whether the video image needs to be switched may include:
detecting whether a first instruction message from the communication opposite end is received; and
when the first instruction message is received, determining whether the video image needs to be switched according to the first instruction message.

In an embodiment, determining whether the video image needs to be switched according to the first instruction message may include:
detecting whether a first operation triggered for the first instruction message is received; and
when the first operation triggered for the first instruction message is detected, determining that the video image needs to be switched.

In an embodiment, determining whether the video image needs to be switched may include:
detecting whether a second instruction message from the terminal device is received; and
when the second instruction message is received, determining whether the video image needs to be switched according to the second instruction message.

In an embodiment, switching the first video image collected by the terminal device to the second video image collected by the designated smart device may include:
determining an identity of the designated smart device;
determining that the designated smart device is communicatively connected to the terminal device via a local area network according to the identity; and
switching the first video image collected by the terminal device to the second video image collected by the designated smart device according to the identity.

In an embodiment, sending the second video image to the communication opposite end may include:
detecting a type of network with the communication opposite end;
when detecting that the communication with the communication opposite end is via a communication network, sending the second video image to the communication opposite end via the communication network; and
when detecting that the communication with the communication opposite end is via an Internet, sending the second video image to the communication opposite end via the Internet.

As to how to achieve the video communication, the follow-up embodiments may be referred to.

So far the above methods provided by the embodiments of the present invention may flexibly switch the video images collected by the designated smart devices at the terminal device side, such that the video images of the terminal device side displayed at the communication opposite end are diversity, it is convenient for the user of the communication opposite end to view the video images collected by different smart devices at the terminal device side, and the flexibility of presenting different video sources is improved.

Hereinafter, the technical solutions provided by the embodiments of the present invention are explained by specific embodiments.

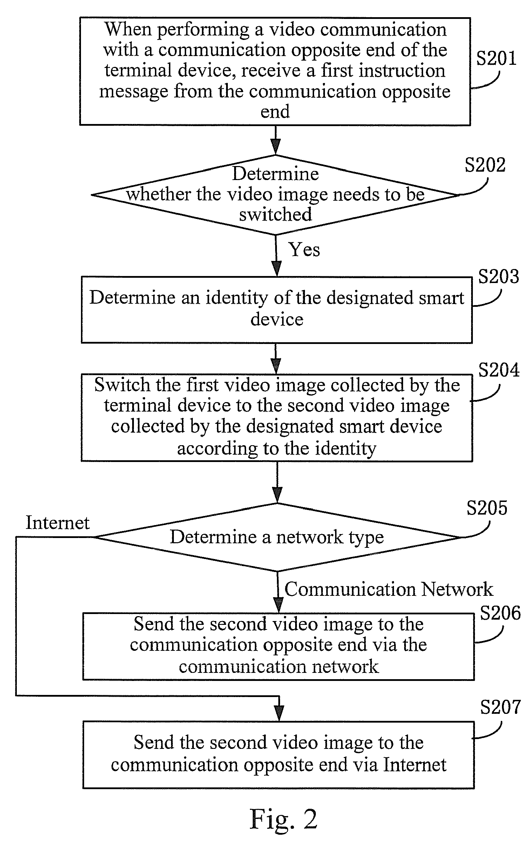

Fig. 2 is a flow chart of a video communication method, according to an exemplary first embodiment. The present embodiment is illustrated by utilizing the above methods provided by the embodiments of the present invention, using an example in which the terminal device receives a first instruction message from the communication opposite end to achieve the video communication and combining Fig. 1B. As shown in Fig. 2, the method includes the following steps.

In step S201, when performing a video communication with a communication opposite end of a terminal device, a first instruction message from the communication opposite end is received.

In an embodiment, the first instruction message of the communication opposite end may be generated by clicking a relevant key on a video communication software or a video communication application (app) at the communication opposite end by a user, and the terminal device may receive the first instruction message via Internet, or may receive the first instruction message via 3G or 4G communication network.

In step S202, whether the video image needs to be switched is determined according to the first instruction message.

In an embodiment, it is possible to determine that the video image needs to be switched when a first operation triggered for the first instruction message is detected, wherein the first operation may be an operation of agreeing with the first instruction message. For example, in an embodiment, when receiving the first instruction message sent from the communication opposite end, a control key for agreeing with the first instruction message will be carried in the first instruction message, and then the user of the terminal device may click the agreement control key to confirm that the video image needs to be switched. For another example, the first instruction message may also carry a control key for rejecting the first instruction message, and the user of the terminal device may click the rejection control key to confirm that the video image does not need to be switched.

In step S203, when determining that the video image needs to be switched, an identity of the designated smart device is determined.

In step S202 and step S203, in an embodiment, it is possible to analyze the first instruction message so as to determine whether the first instruction message carries a first request message for switching video image. If the first request message for switching video image is carried, it is determined that the video image needs to be switched, and then the identity of the smart device designated by the user of the communication opposite end may be obtained by analyzing the first instruction message.

In step S204, the first video image collected by the terminal device is switched to the second video image collected by the designated smart device according to the identity.

For example, as shown in Fig. 1B, the communication opposite end is a desktop computer 12, the desktop computer 12 makes the identity of the smart camera 131 to be carried in the first instruction message, thereby when receiving the first instruction message, the smart phone 11 may analyze the first instruction message and then determine that the smart device whose video image needs to be switched is the smart camera 131.

In step S205, a type of network with the communication opposite end is determined, if the communication with the communication opposite end is via a communication network, step S206 is performed; and if the communication with the communication opposite end is via Internet, step S207 is performed.

In an embodiment, the terminal device not only may perform video communication with the communication opposite end via communication network, but also may perform video communication via Internet. In an embodiment, the communication network may be network such as 3G, 4G provided by the network operator.

In step S206, when detecting that the communication with the communication opposite end is via a communication network, the second video image is sent to the communication opposite end via the communication network.

In step S207, when detecting that the communication with the communication opposite end is via an Internet, the second video image is sent to the communication opposite end via the Internet.

In an embodiment, when the terminal device side does not access Internet via WIFI, in order to ensure the user of the communication opposite end to be capable of normally viewing the scene pictures at the terminal device side and the smart device side, the terminal device may send the second video image to the communication opposite end via 3G or 4G communication network; and when the terminal device side may access Internet via WIFI or network interface, in order to save the network cost of the user of the terminal device, the terminal device may send the second video image to the communication opposite end via Internet.

As one illustrative scene, as shown in Fig. 1B, the user of the smart phone 11 is at home, and the smart camera 131 and the smart camera 132 are respectively provided at different rooms in the home of the user of the smart phone 11. When a user of a desktop computer 12 performs a video communication with the user of the smart phone 11, it is necessary to check conditions of space corresponding to the smart camera 131 and the smart camera 132. In this case, the user of the desktop computer 12 sends a first instruction message to the smart phone 11, the first instruction message carrying information that the space needing to be checked is corresponding to which smart camera (such as the smart camera 131). After analyzing the first instruction message, if detecting that a first operation triggered for the first instruction message is received, the smart phone 11 determines that the video image needs to be switched, then the smart phone 11 switches the first video image collected by the camera device installed in the smart phone 11 to the second video image collected by the smart camera 131, thereby the user at the side of the desktop computer 12 is capable of viewing the image collected by the smart camera 131.

In addition to the advantageous technical effects of the above embodiments, the present embodiment may switch the first video image collected currently by the terminal device to the second video image of the smart device designated by the first instruction message via the first instruction message of the communication opposite end, which facilitates the control to the terminal device side by the communication opposite end, and improves autonomy of switching the video scenes of the terminal device side by the user of the communication opposite end.

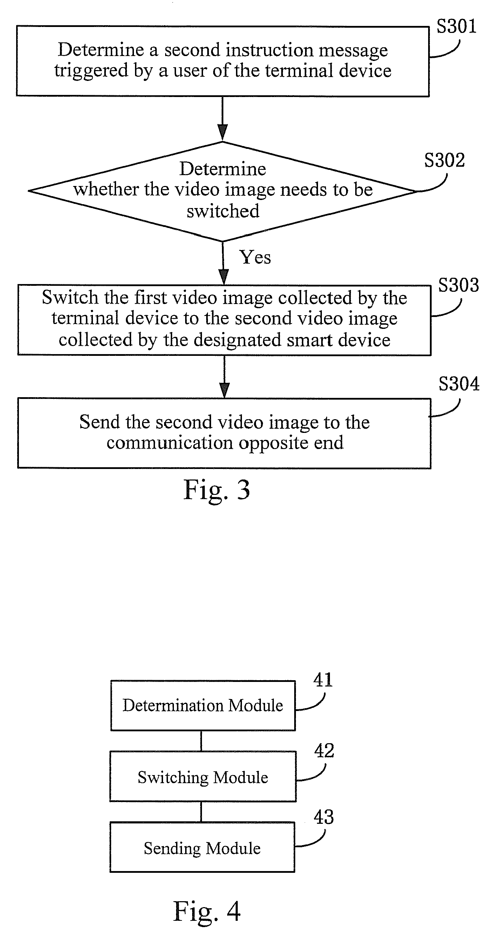

Fig. 3 is a flow chart of a video communication method, according to an exemplary second embodiment. The present embodiment is illustrated by utilizing the above methods provided by the embodiments of the present invention, using an example in which the terminal device side determines a second instruction message to achieve the video communication and combining Fig. 1B. As shown in Fig. 3, the method includes the following steps.

In step S301, when performing a video communication with a communication opposite end of the terminal device, a second instruction message triggered by a user of the terminal device is determined.

In an embodiment, the second instruction message may be generated by clicking by a user of the terminal device a relevant key on video communication software or a video communication application (app) provided in the terminal device.

In step S302, it is determined whether the video image needs to be switched according to the second instruction message.

In an embodiment, it is possible to analyze the second instruction message so as to determine whether the second instruction message carries a second request message for switching the video image, and if the second request message for switching the video image is carried, it is determined that the video image needs to be switched, and then an identity of the smart device designated by the terminal device may be obtained by analyzing the second instruction message.

In step S303, when determining that the video image needs to be switched, the first video image collected by the terminal device is switched to the second video image collected by the designated smart device.

The description of step S303 may be referred to the above step S102, or the above step S203 to step S204, which is not elaborated herein.

In step S304, the second video image is sent to the communication opposite end.

The description of step S304 may be referred to the above step S103, or the above step S205 to step S207, which is not elaborated herein.

As one illustrative scene, as shown in Fig. 1B, illustration is given by using the terminal mobile phone as the smart phone 11, wherein the user of the smart phone 11 is at home, and the smart camera 131 and the smart camera 132 are respectively provided at different rooms in the home of the user of the smart phone 11. When a user of a desktop computer 12 performs a video communication with the user of the smart phone 11, if the user of the smart phone 11 does not desire to allow the user of the desktop computer 12 to view the first video image collected by the camera device of the smart phone 11, a second instruction message may be generated by clicking a relevant key on the smart phone 11. Then the smart phone 11 analyzes the second instruction message, and switches the first video image to the second video image designated by the smart phone 11.

In addition to the advantageous technical effects of the above embodiments, the present embodiment switches the first video image collected currently by the terminal device to the second video image of the smart device designated by the second instruction message via the second instruction message of the terminal device. In this way, when it is inconvenient for the user at the side of the terminal device to allow the user of the communication opposite end to view the scene image collected by the terminal device, the first video image is switched to the second video image, thereby autonomy of switching the video scenes by the user of the terminal device is improved.

Fig. 4 is a block diagram of a video communication device or apparatus, according to an exemplary embodiment. The video communication device is applied (e.g. embedded) in a terminal device. As shown in Fig. 4, the video communication device includes: a determination module 41, a switching module 42, and a sending module 43.

The determination module 41 is configured to, when performing a video communication with a communication opposite end of the terminal device, determine whether a video image needs to be switched.

The switching module 42 is configured to, when the determination module 41 determines that the video image needs to be switched, switch a first video image collected by the terminal device to a second video image collected by a designated smart device, the designated smart device being communicatively connected to the terminal device.

The sending module 43 is configured to send the second video image switched by the switching module 42 to the communication opposite end.

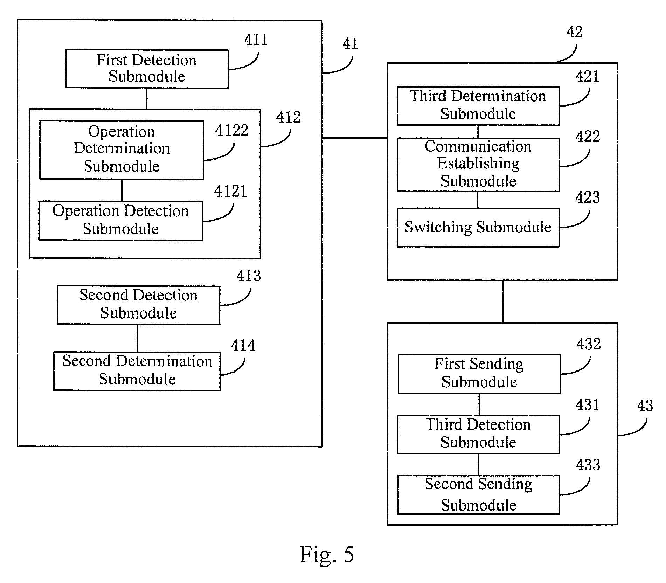

Fig. 5 is a block diagram of another video communication device, according to an exemplary embodiment. On basis of the above embodiment shown in the Fig. 4, in an embodiment, the above determination module 41 may include: a first detection submodule 411 and a first determining submodule 412.

The first detection submodule 411 is configured to detect whether a first instruction message from the communication opposite end is received.

The first determining submodule 412 is configured to, when the first detection submodule 411 receives the first instruction message, determine whether the video image needs to be switched according to the first instruction message.

In an embodiment, the first determining submodule 412 may include: an operation detection submodule 4121 and an operation determination submodule 4122.

The operation detection submodule 4121 is configured to detect whether a first operation triggered for the first instruction message is received.

The operation determination submodule 4122 is configured to, when the first operation triggered for the first instruction message is detected, determine that the video image needs to be switched.

For example, the first operation is an operation of agreeing with the first instruction message. For example, in an embodiment, when receiving a first instruction message sent from the communication opposite end, a control key for agreeing with the first message information is carried, then the user of the terminal device may click the agreement control key so as to confirm that the video image needs to be switched. In addition, the first instruction message may also carry a control key for rejecting the first instruction message, and the user of the terminal device clicks the rejection control key so as to confirm that the video image needs not to be switched.

In an embodiment, the above determination module 41 may include: a second detection submodule 413 and a second determination submodule 414.

The second detection submodule 413 is configured to detect whether a second instruction message from the terminal device is received.

The second determination submodule 414 is configured to, when the second detection submodule 413 detects that the second instruction message is received, determine whether the video image needs to be switched according to the second instruction message.

In an embodiment, the switching module 42 may include: a third determination submodule 421, a communication establishing submodule 422, and a switching submodule 423.

The third determination submodule 421 is configured to determine an identity of the designated smart device.

The communication establishing submodule 422 is configured to determine that the designated smart device is communicatively connected to the terminal device via a local area network according to the identity determined by the third determination submodule 421.

The switching submodule 423 is configured to switch the first video image collected by the terminal device to the second video image collected by the designated smart device via the communication connection established by the communication establishing submodule 422 according to the identity.

In an embodiment, the sending module 43 may include: a third detection submodule 431, a first sending submodule 432, and a second sending submodule 433.

The third detection submodule 431 is configured to detect a network type with the communication opposite end.

The first sending submodule 432 is configured to, when the third detection submodule 431 detects that the communication with the communication opposite end is via a communication network, send the second video image to the communication opposite end via the communication network; and

The second sending submodule 433 is configured to, when the third detection submodule 431 detects that the communication with the communication opposite end is via an Internet, send the second video image to the communication opposite end via the Internet.

With respect to the devices in the above embodiments, the specific manners for performing operations for individual modules therein have been described in detail in the embodiments regarding the methods, which will not be elaborated herein.

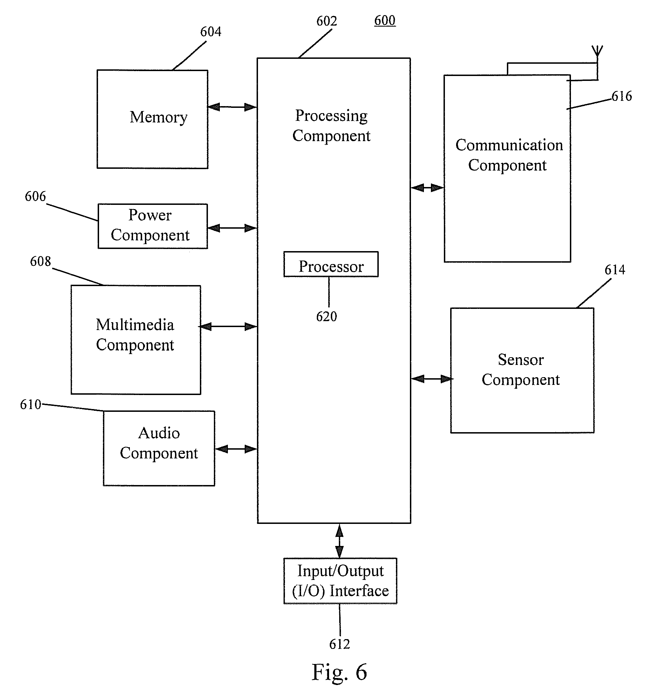

Fig. 6 is a block diagram applicable for a video communication device, according to an exemplary embodiment. For example, the device 600 may be a mobile phone, a computer, a digital broadcast terminal, a messaging device, a gaming console, a tablet, a medical device, exercise equipment, a personal digital assistant, and the like.

Referring to Fig. 6, the device 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone ('MIC") configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600, relative positioning of components, e.g., the display and the keypad, of the device 600, a change in position of the device 600 or a component of the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communication, wired or wirelessly, between the device 600 and other devices. The device 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 604, executable by the processor 620 in the device 600, for performing the above-described methods. For example, the non-transitory computer-readable storage medium may be a ROM, a RAM, a CD-ROM, a magnetic tape, a floppy disc, an optical data storage device, and the like.

## Claims

1. A video communication method, applied in a terminal device, comprising:
when performing a video communication with a communication opposite end of the terminal device, determining (S101) whether a video image needs to be switched;
when determining that the video image needs to be switched, switching (S102) a first video image collected by the terminal device to a second video image collected by a designated smart device, the designated smart device being communicatively connected to the terminal device; and
sending (S103) the second video image to the communication opposite end.

2. The method of claim 1, wherein determining (S101) whether the video image needs to be switched comprises:
detecting (S201) whether a first instruction message from the communication opposite end is received; and
when the first instruction message is received, determining (S202) whether the video image needs to be switched according to the first instruction message.

3. The method of claim 2, wherein determining whether the video image needs to be switched according to the first instruction message comprises:
detecting whether a first operation triggered for the first instruction message is received; and
when the first operation triggered for the first instruction message is detected, determining that the video image needs to be switched.

4. The method of claim 1, wherein determining (S101) whether the video image needs to be switched comprises:
detecting whether a second instruction message from the terminal device is received; and
when the second instruction message is received, determining whether the video image needs to be switched according to the second instruction message.

5. The method of any of claims 1 to 4, wherein switching (S102) the first video image collected by the terminal device to the second video image collected by the designated smart device comprises:
determining (S203) an identity of the designated smart device;
determining that the designated smart device is communicatively connected to the terminal device via a local area network according to the identity; and
switching (S204) the first video image collected by the terminal device to the second video image collected by the designated smart device according to the identity.

6. The method of any of claims 1 to 5, wherein sending (S103) the second video image to the communication opposite end comprises:
detecting (S205) a type of network with the communication opposite end;
when detecting that the communication with the communication opposite end is via a communication network, sending (S206) the second video image to the communication opposite end via the communication network; and
when detecting that the communication with the communication opposite end is via an Internet, sending (S207) the second video image to the communication opposite end via the Internet.

7. A video communication apparatus, applied in a terminal device, comprising:
a determination module (41) configured to, when performing a video communication with a communication opposite end of the terminal device, determine whether a video image needs to be switched;
a switching module (42) configured to, when the determination module (41) determines that the video image needs to be switched, switch a first video image collected by the terminal device to a second video image collected by a designated smart device, the designated smart device being communicatively connected to the terminal device; and
a sending module (43) configured to send the second video image switched by the switching module (42) to the communication opposite end.

8. The apparatus of claim 7, wherein the determining module (41) comprises:
a first detection submodule (411) configured to detect whether a first instruction message from the communication opposite end is received; and
a first determining submodule (412) configured to, when the first detection submodule (411) receives the first instruction message, determine whether the video image needs to be switched according to the first instruction message.

9. The apparatus of claim 8, wherein the first determining submodule (412) comprises:
an operation detection submodule (4121) configured to detect whether a first operation triggered for the first instruction message is received; and
an operation determination submodule (4122) configured to, when the operation detection submodule (4121) detects the first operation triggered for the first instruction message, determine that the video image needs to be switched.

10. The apparatus of any of claims 7 to 9, wherein the determination module (41) comprises:
a second detection submodule (413) configured to detect whether a second instruction message from the terminal device is received; and
a second determination submodule (414) configured to, when the second detection submodule (413) detects that the second instruction message is received, determine whether the video image needs to be switched according to the second instruction message.

11. The apparatus of any of claims 7 to 10, wherein the switching module (42) comprises:
a third determination submodule (421) configured to determine an identity of the designated smart device;
a communication establishing submodule (422) configured to determine that the designated smart device is communicatively connected to the terminal device via a local area network according to the identity determined by the third determination submodule (421); and
a switching submodule (423) configured to switch the first video image collected by the terminal device to the second video image collected by the designated smart device via the communication connection established by the communication establishing submodule (422) according to the identity.

12. The apparatus of any of claims 7 to 11, wherein the sending module (43) comprises:
a third detection submodule (431) configured to detect a type of network with the communication opposite end;
a first sending submodule (432) configured to, when the third detection submodule (431) detects that the communication with the communication opposite end is via a communication network, send the second video image to the communication opposite end via the communication network; and
a second sending submodule (433) configured to, when the third detection submodule (431) detects that the communication with the communication opposite end is via an Internet, send the second video image to the communication opposite end via the Internet.

13. A computer program, which when executing on a processor of a terminal device, performs a video communication method according to any one of claims 1 to 6.

14. A recording medium readable by a computer and having recorded thereon a computer program including instructions for executing the steps of a video communication method according to any one of claims 1 to 6.
